# EUROPEAN PATENT APPLICATION

(11) **EP 4 059 351 A1**
(43) Date of publication of application: **21.09.2022**
(21) Application number: 21163452.2
(22) Date of filing: 18.03.2021
(51) Int. Cl.: A23K 10/20, A23K 20/10, A23K 20/147, A23K 30/20, A23K 40/20, A23K 50/42

(54) **DRY PET FOOD ARTICLE AND METHOD FOR MAKING THE SAME**

(71) Applicant: Georg-August-Universität Göttingen, 37073 Göttingen (DE)
(72) Inventor: KHARAZIPOUR, Alireza, 37079 Göttingen (DE); EURING, Markus, 37124 Rosdorf (DE)
(74) Representative: Michalski Hüttermann & Partner Patentanwälte mbB

(57) **Abstract**

The invention relates to a method for producing dry pet food articles, dry pet food articles obtained by said method, and the use of said dry pet food articles. The dry pet food articles are produced by a method at least comprising the steps: a) providing a moulding material by contacting popcorn with a binder composition, the binder composition at least comprising a protein, a sugar alcohol, and water; b) forming an article from the moulding material by administering heat and/or pressure to the moulding material in a mould. The dry pet food articles can be produced easily with the method according to the invention and the dry pet food articles provide very low caloric value per weight and particularly per volume, while also being well received by pets in terms of taste and mouthfeel.

## Description

The present invention relates to a method for producing dry pet food articles, dry pet food articles obtained by said method, and the use of said dry pet food articles.

Dry pet food, also known as kibble, is essentially known and commonly used for feeding pets such as cats or dogs in a convenient way. One advantage of dry pet food is that it can conveniently be produced in large quantities and has excellent keepability, for example when compared to canned wet food, even after opening. Dry pet food is also commonly used in the form of treats, since it can be easily carried around, for example in a simple bag. For example, dry pet food is often used in dog training as a reward.

Pets, in particular cats and dogs, are very popular throughout the world. In Germany alone there were about 10.1 million dogs and 14.7 million cats counted for the year 2019. However, providing food for pets is very often rather costly, which may be one factor why the majority of food provided to cats and dogs in Germany in the last years has been dried pet food in some form.

Pets very often are overweight. This can have many causes but usually relates to the eating habits of the pets, which essentially are dictated by their owners. It is estimated that about 40% of pets in central Europe are overweight. In Germany about 52% of cats and dogs are overweight according to a study from the Ludwig-Maximilians-Universität München. In the USA 60% of cats and 56% of dogs are on the heavy side according to a study. Obesity of pets is therefore a worldwide problem, which may cause a plethora of different diseases such as diabetes, arthritis and cardiac diseases, statistically reducing the life expectancy of cats and dogs by about two years.

While owners could essentially reduce the amount of food provided to their pets in order to reduce their weight over time, this is not always a feasible method since the pet will essentially feel hungry all the time and may start to display behavioural problems. Also, working out with the pet may often not be a solution if the owner does not have time to spare. Therefore, diet pet foods are becoming increasingly popular. Currently available diet pet foods usually are rather expensive and consist of selected ingredients, allegedly providing a more balanced diet. However, commonly available diet pet foods still provide rather high caloric value so that pets which simply eat too much may still not reduce weight from such diet pet foods. Dry pet foods for low calorie diets can therefore still be improved.

It is therefore an object to provide improved dry pet food with low caloric value.

The object is solved by the method according to claim 1, the dry pet food articles according to claim 12 and further by the use according to claim 15. Further embodiments are given in the dependent claims and the description, as well as in the examples and figures, wherein features discloses in the dependent claims, the description, the examples and figures may individually or in any combination represent a further embodiment of the invention, if the context does not unambiguously indicate the opposite.

The invention provides a method for producing dry pet food articles at least comprising the steps:
a) providing a moulding material by contacting popcorn with a binder composition, the binder composition at least comprising a protein, a sugar alcohol, and water;
b) forming an article from the moulding material by administering heat and/or pressure to the moulding material in a mould.

Surprisingly, it has been found that dry pet food articles can be produced easily with the method according to invention and that the obtained dry pet food articles provide very low caloric value per weight and particularly per volume, while also being well received by pets in terms of taste and mouthfeel. In particular, it has been found that by using popcorn for the moulding material, dry pet food articles can be produced which advantageously have very low caloric value, can be produced in various forms and shapes, can have a low density, are still well received by pets, and can reduce the caloric intake of pets significantly while still providing the same quantity of food in terms of volume.

Without being bound to a theory, it is assumed that the dry pet food articles according to the present invention provide a low amount of convertible energy for particular pets, since many cannot convert starch into energy very well. For example, cats and dogs lack amylases, which usually are responsible for converting starch into energy. Besides starch, popcorn also consists of corn husks, which is a very good fiber for digestion. Likewise popcorn can provide the dog and cat with potassium, calcium and magnesium. Native popcorn is also cholesterol and fat free.

Further surprisingly, it has been found that by using popcorn in combination with the binder composition comprising a protein, a good taste can be introduced into the dry pet food articles, which make the articles well received with the pets. Additionally, the binder composition allows for the formation of articles with various shapes by providing good adhesive properties to the popcorn. Furthermore, by providing the binder composition with the sugar alcohol and water, the processability of the binder composition is facilitated. Surprisingly, it has been found that the use of a binder composition with the aforementioned components allows for comparably good processing when compared to using other binder compositions while simultaneously yielding dry pet food articles with excellent taste and low caloric value.

The term dry pet food article according to the present invention especially means dry pet food, also known as kibble, in some kind of shape or form and is not restricted to a particular production method, shape or form of the article. For example the term article can encompass pellets and moulded articles.

The term "popcorn" in the sense of the present invention includes in particular all materials which, like the puffed corn (*Zea mays, convar. Microsperma*) - if necessary after appropriate greasing - explode when heated rapidly to high temperatures, in that the water present in the seed evaporates abruptly, thus converting the starch contained in the seed into a foam-like consistency. Such behaviour is known, inter alia, from quinoa grain, amaranth, rice or even wheat, materials based on these basic materials are also explicitly referred to and encompassed as "popcorn" for the purposes of the present invention, the term "popcorn" is not intended to be limited to corn alone and was chosen in particular for reasons of simplicity, clarity and readability.

It should be noted that in the following description of the process, when "moulded articles" are mentioned, the precursors of the moulded article during production are also to be included. The term "moulded article" is explicitly intended to be limited not only to the finished moulded article but also to materials or objects from which the moulded articles are made in the manufacturing process; the use of the term "moulded article" also for precursor materials and objects is not for the purpose of restriction but, among other things, for better readability. For the purposes of the present invention, the term "forming an article" is particularly understood to mean a process step in which the actual shape of the article is formed.

The popcorn used in the present invention can be obtained by various methods.

According to a preferred embodiment of the invention, the popcorn used is produced by puffing. Depending on the application, unmodified kernels can be used or suitable seeds, *e.g.* feed corn kernels, are first ground and the kernel fragments are then expanded under the action of pressure and temperature according to the Bichsel process (WO 1999042005A1), which is a defined process. Other processes for puffing the starch-containing grains include, for example, hot plates, hot air machines and microwaves.

According to a preferred embodiment of the invention, the popcorn used is produced by the so-called Cerex process from Cerex AG, CH-3368 Bleienbach. The process can be divided into three sections: Preheating element, reactor as well as expansion chamber. First, the corn kernels are uniformly heated to about 100 °C in the preheating element, then the corn is treated with superheated steam in the reactor, and at the end of the process the corn is fed into an expansion chamber. Here, the corn kernels (corn meal) are made to expand in a certain period of time by reducing the pressure. At the end, the puffed materials are collected and separated from the non-puffed components (Bichsel, n.d.). The conversion of corn meal to popcorn granules by the Cerex process is nearly 100% in most applications, with only less than 5% of the meal not being puffed.

According to one preferred embodiment of the present invention, the popcorn is used as a whole in the moulding material, *i.e.* the popcorn is provided by expanding whole kernels and/or seeds and the popcorn is not thereafter chopped (ground) or crushed.

According to an alternative and equally preferred embodiment, the popcorn used in the moulding material is popcorn which has been produced from previously crushed starting materials (e.g. corn meal, broken corn). If necessary, the expanded granules may be further crushed prior to processing into popcorn kernels.

According to another alternative preferred embodiment, the popcorn used in the moulding material is a mixture of popcorn which has been produced from previously crushed starting materials and popcorn provided by expanding whole kernels and/or seeds.

According to a preferred embodiment of the invention, the popcorn used is obtained from popcorn before processing *(i.e.* the fat content of the starting material for popcorn, such as corn) with a fat content of ≤ 0.5 wt.-%.

In many applications within the present invention, it has been found to be advantageous to keep this fat content as low as possible, as this facilitates the further processing of the popcorn.

According to a preferred embodiment of the present invention, the popcorn is obtained without addition of fat during processing (expansion of the corn).

By using popcorn obtained according to one of the aforementioned method, the dry pet food articles can be produced more easily and furthermore provide good nutritional ingredients.

According to a preferred embodiment of the present invention, the moulding material comprises the popcorn in an amount of ≥ 85 wt.-% to ≤ 95 wt.-%, preferably ≥ 88 wt.-% to ≤ 92 wt.-%, and the binder composition in an amount of ≥ 5 wt.-% to ≤ 15 wt.-%, preferably ≥ 8 wt.-% to ≤ 12 wt.-%, based on the total amount of the moulding material.

Surprisingly it has been found that contacting the popcorn with the binder composition in that amount allows for good taste of the dry pet food articles while also maintaining good adhesion of the popcorn in the dry pet food articles and still providing low caloric value.

According to a preferred embodiment of the present invention, the binder composition comprises the protein in an amount of ≥ 25 wt.-% to ≤ 35 wt.-%, preferably ≥ 28 wt.-% to ≤ 32 wt.-%, the sugar alcohol in an amount of ≥ 25 wt.-% to ≤ 35 wt.-%, preferably ≥ 28 wt.-% to ≤ 32 wt.-%, and the water in an amount of ≥ 25 wt.-% to ≤ 35 wt.-%, preferably ≥ 28 wt.-% to ≤ 32 wt.-%, based on the total amount of binder material.

Surprisingly it has been found that a binder composition with the aforementioned binder composition is particularly suitable for the method according to the present invention, since it can be processed more easily due to a particularly suitable viscosity. Furthermore, the aforementioned binder composition allows for a suitable amount of protein in the dry pet food pellets, providing good taste of the dry pet food articles while also maintaining good adhesion of the popcorn in the dry pet food articles and still providing low caloric value.

According to a preferred embodiment of the present invention, the binder material additionally comprises at least one of a colouring agent, a flavouring agent, a lubrication agent, and a hydrophobing agent, preferably together in an amount of ≥ 0.5 wt.-% ≤ 2 wt.-%, particularly preferably ≥ 0.75 wt.-% ≤ 1.25 wt.-%, based on the total amount of binder material.

Surprisingly it has been found that these can further improve the properties of the dry pet food articles. Particularly, it has been found that the described amounts are sufficient for the agents to provide their advantageous effects, while maintaining the structural integrity of the dry pet food articles and keeping their caloric value low.

According to a preferred embodiment of the present invention, no further ingredients are added to the moulding material, in particular no sugar, salt or oil is added to the moulding material.

According to a preferred embodiment of the present invention, the binder material has a viscosity measured according to DIN EN ISO 2884-1:2006-09 of ≥ 300 mPa/s to ≤ 600 mPa/s, preferably ≥ 380 mPa/s to ≤ 420 mPa/s.

Surprisingly it has been found that with a binder composition of the aforementioned viscosity, the contacting of the popcorn with the binder composition can be performed in a more advantageous manner. Particularly, by providing such a binder composition for the method according to the present application, the binder composition essentially can coat the popcorn entirely. Furthermore, by providing such a binder composition, the binder composition can be processed more easily.

According to a preferred embodiment of the present invention, the protein is an animal based protein, preferably an animal based albumin.

Surprisingly it has been found that animal proteins, in particular animal based albumins, are especially suited for dry pet food articles. Without being bound to a theory, it is assumed that animal proteins, in particular animal based albumins, provide particularly good adhesion of the popcorn and provide a preferred taste of the dry pet food articles.

According to a preferred embodiment of the present invention, the sugar alcohol has a structure according to the following formula I:

[formula I] HOCH₂(CHOH)ₙCH₂OH

wherein n is an integer from 1 to 4;
wherein the sugar alcohol is preferably selected from the group consisting of glycerol, xylitol, mannitol, sorbitol and mixtures thereof, most preferably glycerol.

Surprisingly it has been found that these sugar alcohols are especially suitable for the method according to the present invention. In particular, these sugar alcohols allow for good adaption of the viscosity of the binder composition. Furthermore, it has been found that these sugar alcohols also allow for the binder composition to provide an advantageous surface tension for coating the popcorn. Additionally, these sugar alcohols may decompose during the forming of the article and evaporate so that the resulting dry pet food article still provides a lower caloric value.

According to a preferred embodiment of the present invention, the popcorn is contacted with the binder composition by spraying the binder composition onto the popcorn.

It has been surprisingly found that this method is most suitable for contacting the popcorn, since it allows for a very homogeneous coating of the popcorn with the binder composition, leading to good adhesion of the popcorn throughout the dry pet food article.

According to a first preferred embodiment of the present invention, the article is formed by moulding the moulding material in a moulding cavity using a pressure piston.

As a result of the pressure, the moulding material acquires the geometry specified by the mould. The moulding material present in the cavity may preferably be heated under pressure in the moulding cavity, thereby allowing for better crosslinking of the popcorn in the moulded article.

According to an alternative preferred embodiment of the present invention, the article is formed by moulding the moulding material in an automatic moulding machine.

Thereby higher pressures and/or temperatures can be used. In this case, the first process step consists of pneumatically compressing the moulding material and filling the closed special automatic moulding machine with the compressed moulding compound. Alternatively, the moulding compound can also be conveyed into the cavity by a vacuum. With the aid of temperature and pressure, the moulding compound is brought to the desired curing temperature.

According to a preferred embodiment of the present invention, the pressure administered in step b) is from ≥ 0.1 bar to ≤ 1.5 bar, preferably from ≥ 0.5 bar to ≤ 1 bar.

It has been found that pressures in this range lead to dry pet food articles which provide particularly good crosslinking of the popcorn and still have a comparably low density.

According to a preferred embodiment of the present invention, the pressure administered in step b) is administered for a duration per mm thickness of the article is from ≥ 0.5 s to ≤ 20 s/mm preferably ≤ 10 s.
It has been found that administering the pressure for the aforementioned amount of time allows for particularly good crosslinking of the popcorn throughout the entire article.

According to a preferred embodiment of the present invention, the temperature administered in step b) is from ≥ 50 °C to ≤ 200 °C, preferably ≥ 80 °C to ≤ 140 °C.

It has been found that administering the temperature in the aforementioned range allows for the binder material to form particularly good crosslinking between the popcorn.

According to a preferred embodiment of the present invention, the temperature in step b) is achieved by means of steam, dry steam, microwaves or radio waves.

According to a further preferred embodiment of the present invention, step b) includes at least temporarily exposing the moulding material to electromagnetic radiation in a frequency range from ≥30 kHz bis ≤300GHz.

It has been surprisingly found that with electromagnetic radiation in that frequency range, the temperature in step b) can be controlled effectively and that the crosslinking of the popcorn is comparably good.

Preferably, the process is carried out such that when the electromagnetic radiation is used, a temperature of ≥ 100°C, still preferably ≥ 150°C, is reached at least at a region on the surface of the molded material.

According to a preferred embodiment, the electromagnetic radiation has a power of ≥ 20 W to ≤ 5000W, still preferably ≥ 50 W to ≤ 4000W, still preferably ≥ 80 W to ≤ 3000W, and most preferably ≥ 100 W to ≤ 2500W.

According to a preferred embodiment, the molded material is exposed to electromagnetic radiation such that the power density (measured with respect to the surface of the molded part) is from ≥ 1 W/cm² to ≤ 250 W/cm², still preferably ≥ 2 W/cm² to ≤ 200 W/cm², still preferably ≥ 5 W/cm² to ≤ 150 W/cm², and most preferably ≥ 10 W/cm² to ≤ 100 W/cm².

According to a preferred embodiment of the invention, the amplitude of the electromagnetic radiation is from ≥ 1 kV to ≤ 10 kV.

According to a preferred embodiment of the invention, radio waves are used during manufacture. In particular, this refers to waves in the frequency range from ≥30 kHz to ≤300 MHz.

According to a preferred embodiment of the invention, microwaves are used during manufacture. In particular, this is understood to mean waves in the frequency range from ≥300 MHz to ≤300 GHz.

According to a preferred embodiment, the process comprises a pressing step and, during the pressing of the molded material, the latter is temporarily exposed to electromagnetic radiation in a frequency range of ≥30 kHz to ≤300GHz in a targeted manner. In particular, a frequency range between 25 MHz and 30 MHz is advantageous.

The present invention furthermore relates to dry pet food articles obtained by the method according to the present invention, comprising popcorn from the binder material.

Surprisingly, it has been found that the dry pet food articles have very low caloric value per weight and particularly per volume, while also being well received by pets in terms of taste and mouthfeel.

According to a preferred embodiment of the present invention, the dry pet food article has a bulk density measured according to DIN EN ISO 845:2009-10 of > 100 kg/m³ to ≤ 200 kg/m³, preferably of ≥ 150 kg/m³ to ≤ 170 kg/m³.

Thereby it can be achieved that the dry pet food articles have a high volume per calorie, *i.e.* a low caloric value per volume. Without being bound to a theory, this allows pet owners to reduce the calory intake of their pets without reducing the amount (volume) of food they provide to their pets. It has been surprisingly found that, even though the dry pet food articles according to the present invention provided much less calories, the pets are more willing to be satisfied with the amount of food provided since the volume must not necessarily be reduced during a diet.

According to a preferred embodiment of the present invention, the dry pet food article has a caloric value of ≥ 16 kcal/100 g to ≤ 48 kcal/100 g.

Thereby, not only the caloric value per volume is low, but also the caloric value per weight of the dry pet food articles.

According to a preferred embodiment of the invention, the dry pet food article has a shape attractive for a pet, such as a dog or a cat.

Particularly, the dry pet food article can be in the shape of commonly known dry pet food, such as kibble, but also can have the shape and size of commonly known treats, such as the shape of a bone.

Thereby it can be achieved that the pet is already accustomed to the shape and feel of the dry pet food article, making it easier to switch to the dry pet food articles according to the present invention.

The present invention furthermore relates to the use of the dry pet food articles according to the present invention for controlling the weight of pet, comprising the steps of substituting the pet food of a pet at least partially by a dry pet food article according to the present invention.

It has been surprisingly found that the pet food of a pet can at least partially be substituted by a dry pet food article according to the present invention. Thereby the caloric intake of the pet can advantageously be reduced. Since the volume of the food can remain unchanged, it has been surprisingly found that pets usually accept such a substitution without much trouble, therefore allowing for an easy weight control of the pet.

Additional details, characteristics and advantages of the object of the invention are disclosed in the sub-claims and the following examples and description of the figures. Such embodiments do not necessarily represent the full scope of the invention, however, and reference is made therefore to the claims and herein for interpreting the scope of the invention. It is to be understood that both the foregoing general description and the following detailed description are exemplary and explanatory only and are intended to provide further explanation of the present invention as claimed.
Fig. 1 shows schematically the method according to the present invention.
Fig. 2 shows schematically method step b), wherein the moulding material is moulded in a moulding cavity using a pressure piston.

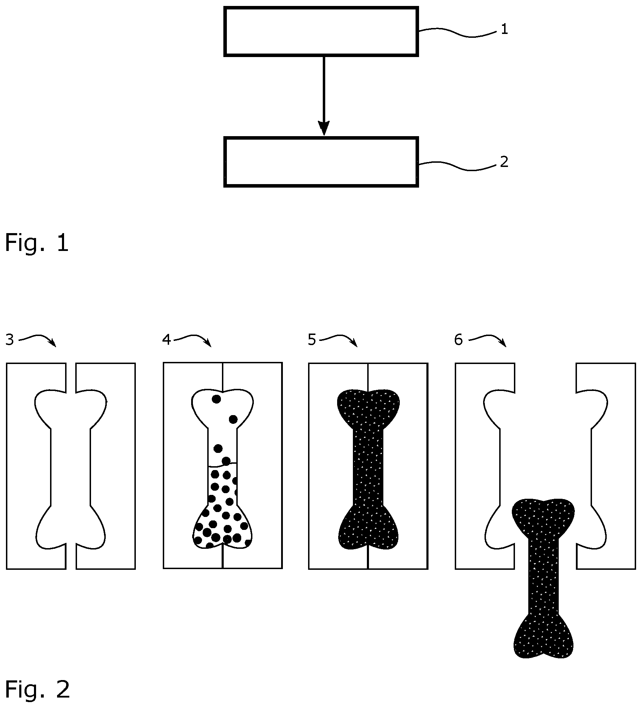

Fig. 1 shows schematically the method according to the present invention. In step 1 a moulding material is provided by contacting popcorn with a binder composition, the binder composition at least comprising a protein, a sugar alcohol, and water. In step 2 (method step b) the dry pet food article is formed by forming an article from the moulding material by administering heat and/or pressure to the moulding material in a mould.

Fig. 2 shows schematically the method step b), wherein the moulding material is moulded in a moulding cavity using a pressure piston. In step 3 a moulding cavity is provided. The moulding cavity is filled in step 4 with the moulding material. In step 5 pressure is applied to the moulding cavity by using a pressure piston. Finally, in step 6 the moulding cavity is opened again and the dry pet food article is released. Fig. 2 schematically shows the dry pet food article as a bone. However the dry pet food article can also have other shapes and forms.

Additionally, the following examples are provided.

### Example I

For the production of a dry pet food article according to the invention, fully expanded popcorn granules are provided. The popcorn granules are contacted with a binder composition comprising 1/3 blood albumin, 1/3 glycerol, and 1/3 water by weight. The binder composition was sprayed onto the popcorn granules in a mixing unit in an amount 10 wt.-% based on the total amount of moulding material. The resulting moulding material was introduced into a cavity as depicted in Fig. 2, which was heated under pressure and conductive heat transfer. The cavity was then closed using a pressure piston. The pressure caused the moulding compound to acquire the shape specified by the mould (see Fig. 2 step 5). In the final process step, the finished dry pet food article was removed from the cavities (see Fig. 2 step 6) and could be used directly for consumption by dogs and cats.

### Example 2

Similar to example 1, the popcorn granules ware sprayed with the binder composition. In the second process step, the moulding material was conveyed through an automatic conveyor by means of injection nozzles into the cavity of a moulding machine, in which an optional overpressure (e.g., 0.1 to 6 bar) and about 5 to 7 kV radio waves ware generated. Dwell times of 10 to 30 seconds were used, depending on the size and shape of the dry pet food articles. In the final process step, the finished dry pet food articles were removed from the moulding machine. They could be directly used for consumption by dogs and cats.

### Example 3

In this example, the dry pet food articles according to the present invention were fed to dogs and cats, separated by age, breed, and weight as replacement of at least part of the normal diet. The dry pet food articles of the present invention were readily accepted by the animals and were very well tolerated. Since the dry pet food articles were very low in calories, they were very suitable as a replacement food for overweight dogs and cats to gradually reduce the body weight. The dry pet food articles were very rich in dietary fiber and caused a longer lasting feeling of satiety with the animals. After a three to four weeks of feeding with dry pet food articles according to the present invention, there was a reduction of up to 20 percent of the body weight of the studied pets.

## Claims

1. Method for producing dry pet food articles at least comprising the steps:
a) providing a moulding material by contacting popcorn with a binder composition, the binder composition at least comprising a protein, a sugar alcohol, and water;
b) forming an article from the moulding material by administering heat and/or pressure to the moulding material in a mould.

2. Method according to claim 1, wherein the moulding material comprises the popcorn in an amount of ≥ 85 wt.-% to ≤ 95 wt.-%, preferably ≥ 88 wt.-% to ≤ 92 wt.-%, and the binder composition in an amount of ≥ 5 wt.-% to ≤ 15 wt.-%, preferably ≥ 8 wt.-% to ≤ 12 wt.-%, based on the total amount of the moulding material.

3. Method according to any one of the claims 1 or 2, wherein the binder composition comprises the protein in an amount of ≥ 25 wt.-% to ≤ 35 wt.-%, preferably ≥ 28 wt.-% to ≤ 32 wt.-%, the sugar alcohol in an amount of ≥ 25 wt.-% to ≤ 35 wt.-%, preferably ≥ 28 wt.-% to ≤ 32 wt.-%, and the water in an amount of ≥ 25 wt.-% to ≤ 35 wt.-%, preferably ≥ 28 wt.-% to ≤ 32 wt.-%, based on the total amount of binder material.

4. Method according to any one of the claims 1 to 3, wherein the binder material additionally comprises at least one of a colouring agent, a flavouring agent, a lubrication agent, and a hydrophobing agent, preferably together in an amount of ≥ 0.5 wt.-% ≤ 2 wt.-%, particularly preferably ≥ 0.75 wt.-% ≤ 1.25 wt.-%, based on the total amount of binder material.

5. Method according to any one of the claims 1 to 4, wherein the binder material has a viscosity measured according to DIN EN ISO 2884-1:2006-09 of ≥ 300 mPa/s to ≤ 600 mPa/s, preferably ≥ 380 mPa/s to ≤ 420 mPa/s.

6. Method according to any one of the claims 1 to 5, wherein the protein is an animal based protein, preferably an animal based albumin.

7. Method according to any one of the claims 1 to 6, wherein the sugar alcohol has a structure according to the following formula I:
[formula I] HOCH₂(CHOH)ₙCH₂OH
wherein n is an integer from 1 to 4;
wherein the sugar alcohol is preferably selected from the group consisting of glycerol, xylitol, mannitol, sorbitol and mixtures thereof, most preferably glycerol.

8. Method according to any one of the claims 1 to 7, wherein the popcorn is contacted with the binder composition by spraying the binder composition onto the popcorn.

9. Method according to any one of the claims 1 to 8, wherein the article is formed by moulding the moulding material in a moulding cavity using a pressure piston, or by moulding the moulding material in an automatic moulding machine.

10. Method according to any one of the claims 1 to 9, wherein the pressure administered in step b) is from ≥ 0.1 bar to ≤ 1.5 bar, preferably from ≥ 0.5 bar to ≤ 1 bar.

11. Method according to any one of the claims 1 to 10, wherein the temperature administered in step b) is from ≥ 50 °C to ≤ 200 °C, preferably ≥ 80 °C to ≤ 140 °C.

12. Dry pet food article obtained by the method according to any one of the claims 1 to 11, comprising popcorn and at least the protein from the binder material.

13. Dry pet food article according to claim 12, the dry pet food article having a bulk density measured according to DIN EN ISO 845:2009-10 of ≥ 100 kg/m³ to ≤ 200 kg/m³, preferably of ≥ 150 kg/m³ to ≤ 170 kg/m³.

14. Dry pet food article according to any one of the claims 12 and 13, wherein the dry pet food article has a caloric value of > 16 kcal/100 g to ≤ 48 kcal/100 g

15. Use of the dry pet food articles according to any one of the claims 12 to 14, for controlling the weight of a pet, comprising the steps of substituting the pet food of a pet at least partially by a dry pet food article according to any one of the claims 12 to 14.
